# EUROPÄISCHE PATENTSCHRIFT

(11) **EP 0 825 352 B1**
(45) Veröffentlichungstag und Bekanntmachung des Hinweises auf die Patenterteilung: **03.11.1999**
(21) Anmeldenummer: 97810552.6
(22) Anmeldetag: 05.08.1997
(51) Int. Cl.: F16B 13/06, F16B 13/08, F16B 13/12

(54) **Spreizdübel**
Expansion dowel
Cheville d'expansion

(30) Priorität: 16.08.1996 DE 19632879
(43) Veröffentlichungstag der Anmeldung: 25.02.1998
(73) Patentinhaber: HILTI Aktiengesellschaft, 9494 Schaan (LI)
(72) Erfinder: Hartmann, Markus, 6820 Frastanz (AT)
(74) Vertreter: Wildi, Roland

(56) Entgegenhaltungen:
- CH-A- 661 569
- FR-A- 2 566 853
- US-A- 2 648 247
- US-A- 3 951 034
- US-A- 4 474 515

## Beschreibung

Die Erfindung betrifft einen Spreizdübel mit einer Spreizhülse gemäss dem Oberbegriff des Patentanspruchs 1.

Aus der US-A-3,881,393 ist ein Spreizanker bekannt, der einen Gewindebolzen und ein schraubenlinienförmig auf den Schaft des Bolzens zu einer Hülse gewickeltes Blechband aufweist. Am in Setzrichtung vorderen Ende weist die Hülse einen mutterartigen Flansch auf, in den der Gewindebolzen eingedreht ist. Bei einer Verdrehung des Gewindebolzens bewirkt der Flansch durch seine Axialbewegung eine Stauchung der mit ihrem rückwärtigen Ende an einem Anschlussbauteil anliegenden Hülse und dadurch deren radiale Aufweitung. Die Funktion dieses Spreizankers ist relativ kompliziert. Das Wickeln des Blechbandes zu einer Hülse und insbesondere die Anformung und Ausbildung des mutterartigen Flansches erfordert spezielle Formgebungswerkzeuge. Dadurch ist die Herstellung dieses bekannten Spreizankers relativ aufwendig und teuer.

Aus der GB-A-2 126 681 ist ein Spreizdübel bekannt, der eine Spreizhülse umfasst, die einen relativ breiten Längsschlitz aufweist, der sich über die gesamte Länge der Spreizhülse erstreckt und gegenüber der Längsachse der Hülse geneigt verläuft. Die Hülse weist gegenüber der Aufnahmebohrung ein radiales Übermass auf. Der relativ breite Längsschlitz ermöglicht es, die Spreizhülse beim Einsetzen in die Aufnahmebohrung radial zusammenzupressen. Die inherente Federkraft bewirkt ein Verspreizen der Spreizhülse in der Aufnahmebohrung. Dieser Spreizdübel ist für Anwendungen im Bau von Holzmöbeln geeignet. Für grössere axiale Zugbelastungen reicht die Spreizkraft dieses bekannten Spreizdübels nicht aus.

Aufgabe der vorliegenden Erfindung ist es, einen Spreizdübel zu schaffen, der sehr einfach im Aufbau und in seiner Funktion ist und ausreichend hohe Haltekräfte aufweist. Die Spreizkraft des Spreizdübels soll möglichst gleichmässig über die gesamte Längserstreckung des Spreizdübels in den Untergrund einleitbar sein. Dabei soll der Spreizdübel einfach und kostengünstig herstellbar sein.

Die Lösung dieser Aufgabe besteht in einem Spreizdübel mit den im kennzeichnenden Abschnitt des Patentanspruchs 1 angeführten Merkmalen. Insbesondere wird durch die Erfindung ein Spreizdübel geschaffen, der eine Spreizhülse umfasst, die durch axiale Stauchung radial aufweitbar ist. Die Spreizhülse ist mit einem Schlitz versehen, der sich über ihre gesamte axiale Länge erstreckt und gegenüber ihrer Achse geneigt verläuft. Im unverspreizten Zustand ist die Spreizhülse derart in axialer Richtung gestreckt, dass jeweils ein Randbereich des Schlitzes eine Stimseite der Spreizhülse überragt. Es sind Mittel vorgesehen, welche die Spreizhülse im axial gestauchten und radial aufgeweiteten Zustand sichern.

Durch die axiale Streckung wird der Aussendurchmesser der Spreizhülse verringert. Die Streckung der Spreizhülse ist durch den geneigt zur Achse verlaufenden Längsschlitz erleichtert. Die Ränder des Längsschlitzes überragen jeweils die Stirnflächen der Spreizflächen. Durch axiales Stauchen der auseinandergezogenen Spreizhülse nehmen die Stirnflächen wieder eine im wesentlichen parallel zueinander verlaufende Lage ein und die Spreizhülse wird radial aufgeweitet. Auf diese Weise übt die Spreizhülse über ihre gesamte Länge mit ihrem gesamten Umfang einen gleichmässigen Spreizdruck auf die Wandungen einer Aufnahmebohrung aus. Der erfindungsgemässe Spreizdübel ist sehr einfach und kostengünstig herstellbar. Seine Anwendung ist unkompliziert und leicht verständlich. Die in der Aufnahmebohrung verspreizte Spreizhülse wird durch spezielle Mittel daran gehindert wieder in die axial auseinandergezogene Ausgangsform zurückzukehren.

Um zu vermeiden, dass sich die Randflächen des Längsschlitzes der Spreizhülse radial zueinander verschieben, sind an den Randflächen des Längsschlitzes Führungselemente vorgesehen, die axial aneinander gleiten und ein radiales Verschieben der Randflächen relativ zueinander verhindern. Vorzugsweise bestehen die Fürhungselemente aus einer Nut an einer der Randflächen und einer korrespondierenden Feder an der anderen Randfläche des Längsschlitzes.

In einer Variante der Erfindung ist der Winkel, unter dem der Längsschlitz gegenüber der Achse geneigt verläuft, kleiner oder gleich dem Grenzwinkel, bei dem Selbsthemmung eintritt, wobei der Grenzwinkel durch die Beziehung α = arctan (µ_{Gleit}) definiert ist und µ_{Gleit} den Reibungskoeffizienten bei Gleitreibung bezeichnet, und beträgt vorzugsweise etwa 2° bis etwa 6°. Bei diesen Winkelverhältnissen sind die Mittel zur Sicherung der axial gestauchten und radial aufgeweiteten Spreizhülse von den aneinander gleitenden Randflächen des Längsschlitzes gebildet. Die Reibungskraft der aneinander gleitenden Randflächen ist derart gross, dass Selbsthemmung eintritt und verhindert, dass die Spreizhülse wieder in ihre auseinandergezogene Ausgangsstellung zurückkehrt. Ein derartig ausgebildeter Spreizdübel kann sehr einfach in eine Aufnahmebohrung eingesetzt werden und beispielsweise durch axiale Schläge auf die rückwärtige Stirnfläche der Spreizhülse radial aufgeweitet und verspreizt werden. Indem die aneinander gleitenden Randflächen des Längsschlitzes mit miteinander verrastbaren Rippen oder Verzahnungen ausgestattet sind, wird der Reibwert noch weiter erhöht bzw. wird eine Rückkehr der Spreizhülse in die unverspreizte Ausgangsposition durch eine formschlüssige Verbindung unterbunden.

Vorzugsweise sind an dem derartig ausgebildeten Spreizdübel an seinem in Setzrichtung rückwärtigen Abschnitt der Spreizhülse Lastangriffsmittel für den Anschluss eines Bauteils vorgesehen. Die Lastangriffsmittel können ein Innengewinde sein, in das eine Befestigungsschraube eingreift. Es kann auch ein Flansch vorgesehen sein, der sich an der Oberfläche des Anschlussbauteils abstützt und dieses derart festlegt. Besonders vorteilhaft ist es, wenn die Spreizhülse eine Innengewindehülse umgibt. Dabei stützt sich die Spreizhülse an einer Ringschulter am Vorderende der Innengewindehülse ab. Auf diese Weise ist sichergestellt, dass das als Lastangriffsmittel dienende Innengewinde durchgängig ist.

In einer alternativen Ausführungsvariante des erfindungsgemässen Spreizdübels ist der Winkel, unter dem der Längsschlitz gegenüber der Achse geneigt verläuft, grösser als der Grenzwinkel, bei dem Selbsthemmung eintritt, wobei der Grenzwinkel durch die Beziehung α = arctan (µ_{Gleit}) definiert ist und µ_{Gleit} den Reibungskoeffizienten bei Gleitreibung bezeichnet. Bei dieser Ausführungsvariante ist es erforderlich, zur Aufrechterhaltung der Spreizkraft auf die Spreizhülse eine axiale Spannkraft auszuüben. Zu diesem Zweck ist die Spreizhülse zwischen zwei axial beabstandeten Anschlagschultern an einer Ankerstange angeordnet, die axial relativ zueinander verschiebbar sind, wobei die Spreizhülse axial gestaucht und radial aufgeweitet wird. Zugleich bilden die Anschlagschultern die Mittel zur Sicherung der axial gestauchten und radial aufgeweiteten Spreizhülse, indem sie die axiale Spannkraft aufrechterhalten. Der Vorteil dieser Variante des erfindungsgemässen Spreizdübels besteht darin, dass bei Beseitigung der axialen Spannkraft die Spreizhülse in den ursprünglichen Zustand zurückkehrt, in dem jeweils ein Randbereich des Schlitzes eine Stimfläche der Hülse überragt und der Durchmesser der Spreizhülse reduziert ist. Auf diese Weise ist der Spreizdübel wieder vollständig demontierbar.

Vorzugsweise ist die Ankerstange ein Kopfbolzen, wobei die in Setzrichtung vordere Anschlagschulter durch den Kopf des Kopfbolzens gebildet ist und die rückwärtige Anschlagschulter von einer Mutter gebildet ist, die, gegebenenfalls unter Zwischenlage einer Unterlagscheibe, auf ein Aussengewinde am rückwärtigen Ende des Kopfbolzens aufgeschraubt ist. Die Mutter dient gleichzeitig der Festlegung eines Anschlussbauteils.

Die einfache Fertigungbarkeit des Spreizdübels gemäss einer der Varianten der Erfindung wird noch erleichtert, indem die Spreizhülse ein Blechbiegestanzteil ist. Auf diese Weise kann die Spreizhülse in relativ einfachen massentechnischen Fertigungsverfahren gestanzt und geformt werden.

Indem die Aussenfläche der Spreizhülse mit Vorsprüngen, Rippen oder dergleichen reibwerterhöhenden Mitteln versehen ist, können höhere Haltewerte erzielt werden. Die Vorsprünge, Rippen oder dergleichen graben sich beim Aufspreizen der Spreizhülse in die Wandung der Aufnahmebohrung und bilden einen mehr oder weniger stark ausgeprägten Formschluss, der die Haltewirkung des Spreizdübels unterstützt.

Im folgenden wird die Erfindung anhand von in den Figuren schematisch dargestellten Ausführungsbeispielen näher erläutert. Es zeigen:
- Fig. 1: ein erstes Ausführungsbeispiel des erfindungsgemässen Spreizdübels im unverspreizten Zustand in einer Aufnahmebohrung;
- Fig. 2: den Spreizdübel gemäss Fig. 1 im verspreizten Zustand;
- Fig. 3: ein Detail einer Variante des erfindungsgemässen Spreizdübels;
- Fig. 4: ein weiteres Ausführungsbeispiel des erfindungsgemässen Spreizdübels; und
- Fig. 5: einen Querschnitt senkrecht zur Achse einer Variante des Spreizdübels gemäss Fig. 4.

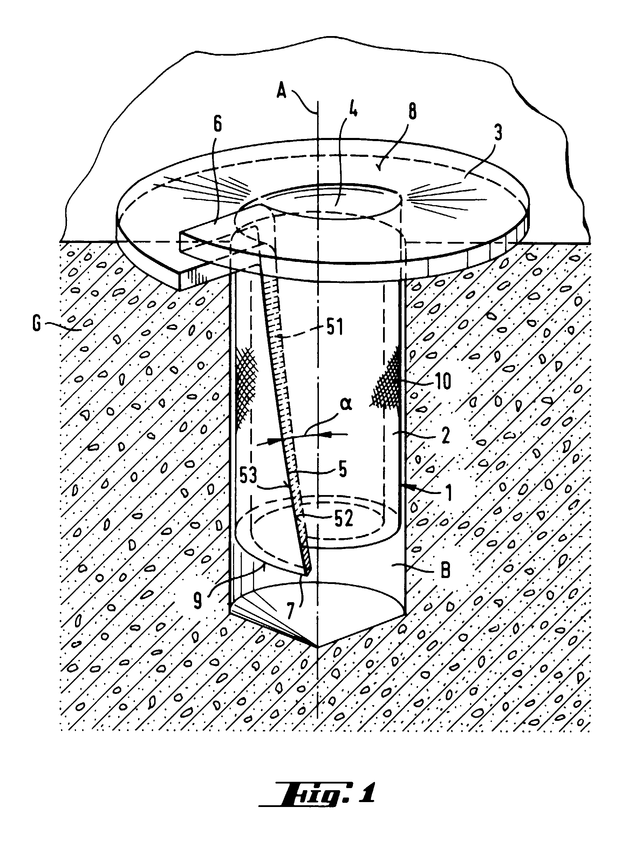

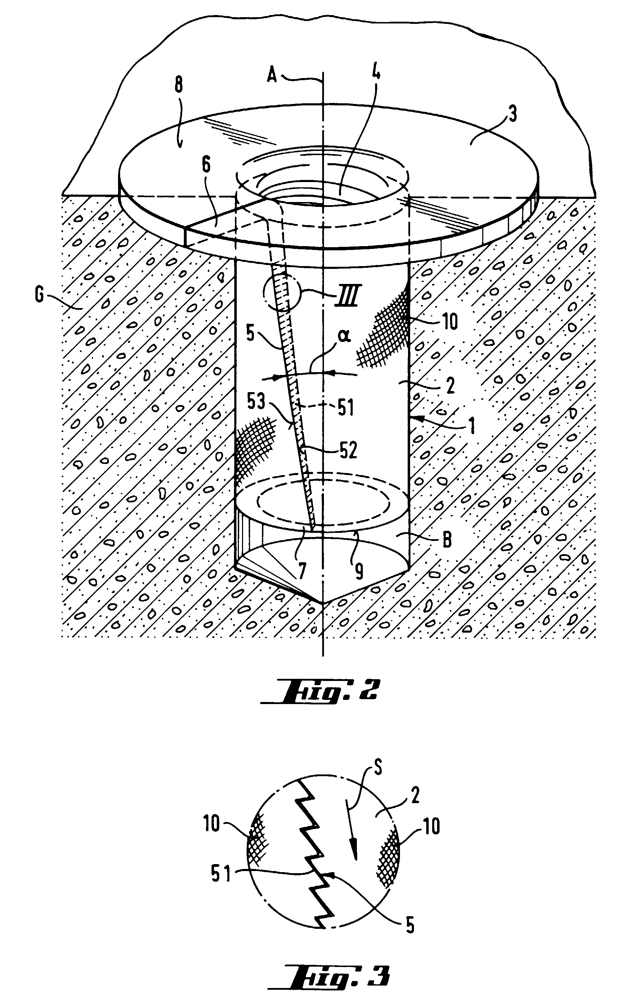

Ein erstes Ausführungsbeispiel des erfindungsgemässen Spreizdübels ist in Fig. 1 und 2 gesamthaft mit dem Bezugszeichen 1 versehen. Dabei zeigt Fig. 1 den Spreizdübel 1 in eine Aufnahmebohrung B im Untergrund G eingesetzt, jedoch noch im unverspreizten Zustand, während der Spreizdübel 1 in Fig. 2 im verspreizten Zustand dargestellt ist. Der Spreizdübel 1 umfasst eine Spreizhülse 2, die an ihrem rückwärtigen Ende mit einem flanschartigen Kragen 3 als Lastangriffsmittel zur Festlegung eines Anschlussbauteils versehen ist. Die Spreizhülse 2 weist eine axiale Durchgangsbohrung 4 auf. Die Durchgangsbohrung 4 kann mit einem Innengewinde versehen sein, welches beispielsweise den Anschluss einer Gewindestange ermöglicht. Die Spreizhülse 2 ist über ihre gesamte Länge mit einem Schlitz 5 versehen, der gegenüber ihrer Achse A geneigt verläuft. Die derart längsgeschlitzte Spreizhülse 2 ist derart axial gestreckt, dass der rückwärtige Randbereich 6 die rückwärtige Stirnfläche 8 und der vordere Randbereich 7 des Schlitzes 5 die vordere Stirnfläche 9 der Spreizhülse 2 überragt. Dadurch ist der Aussendurchmesser der unverspreizten Spreizhülse 2 kleiner als der Durchmesser der Aufnahmebohrung B.

Fig. 2 zeigt den Spreizdübel 1 aus Fig. 1 im verspreizten Zustand. Die Spreizhülse 2 ist durch axiale Schläge auf den Kragen 3 verspreizt worden. Dabei sind die Randflächen des Längsschlitzes 5 aneinander entlang geglitten, bis die die Stirnflächen der Spreizhülse 2 überragenden Randbereiche des Längsschlitzes 5 sich in der Ebene der Stirnflächen befinden. Fig. 2 zeigt den Randbereich 6, der in der Ebene der rückwärtigen Stirnfläche 8 liegt. Ist der Winkel α, unter dem der Längsschlitz 5 gegenüber der Achse A der Spreizhülse 2 geneigt verläuft, kleiner oder gleich dem Grenzwinkel, bei dem Selbsthemmung eintritt, dann reicht die Reibungskraft der aneinander liegenden Randflächen des Längsschlitzes 5 aus, um die Spreizhülse 2 im verspreizten Zustand zu sichern.

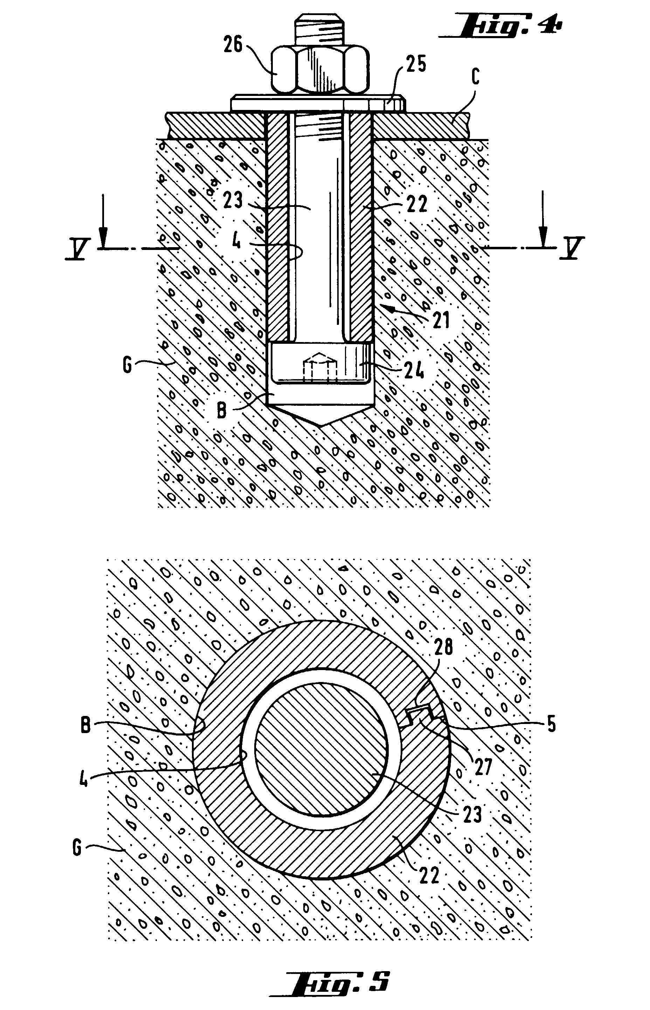

Zur Unterstützung der Sicherung durch Selbsthemmung und insbesondere bei Neigungswinkeln α, die kleiner sind als der Winkel der Selbsthemmung, weisen die Randflächen des Längsschlitzes zusätzliche Mittel auf, die ein Zurückkehren der Spreizhülse 2 in den gestreckten Ausgangszustand verhindern. Gemäss der vergrösserten Detaildarstellung (Ausschnitt III in Fig. 2) in Fig. 3 ist dazu an den aneinander gleitenden Randflächen 52, 53 des Längsschlitzes 5 eine Verzahnung 51 vorgesehen, welche ein leichtes Aneinandergleiten der Randflächen in Setzrichtung S ermöglicht, ein Zurückverschieben in die Gegenrichtung jedoch blockiert. Anstelle einer Verzahnung können auch Rippen oder dergleichen Rastelemente an den Randflächen angeordnet sein.

Wie in den Fig. 1 und 2 angedeutet, kann die Aussenfläche der Spreizhülse 2 mit Vorsprüngen, Rippen oder dergleichen reibwerterhöhenden Mitteln 10 versehen sein. Die Vorsprünge, Rippen oder dergleichen 10 graben sich beim Aufspreizen der Spreizhülse 2 in die Wandung der Aufnahmebohrung B und bilden einen mehr oder weniger stark ausgeprägten Formschluss, der die Haltewirkung des Spreizdübels 1 unterstützt.

Das in Fig. 4 dargestellte weitere Ausführungsbeispiel eines erfindungsgemässen Spreizdübels ist gesamthaft mit dem Bezugszeichen 21 versehen. Der Spreizdübel 21 umfasst eine Spreizhülse 22, durch dessen axiale Durchgangsbohrung 4 eine Ankerstange 23 geführt ist. Die Spreizhülse 22 ist analog zu der Spreizhülse des ersten Ausführungsbeispiels des erfindungsgemässen Spreizdübels mit einem Längsschlitz versehen, der gegenüber der Achse der Spreizhülse geneigt verläuft. Die geschlitzte Spreizhülse ist im unverspreizten Zustand wiederum derart axial gestreckt, dass jeweils ein Randbereich des Längsschlitzes die vordere bzw. die rückwärtige Stirnfläche der Spreizhülse 22 überragt. Am in Setzrichtung vorderen Ende der Ankerstange ist ein Kopf 24 angeordnet, der einen ersten Anschlag für die vordere Stirnfläche der Spreizhülse 22 bildet. Am rückwärtigen Ende der Ankerstange 23 ist ein Aussengewinde ausgebildet, auf das eine Mutter 26 aufschraubbar ist. Die Mutter 26 kann direkt an der rückwärtigen Stirnfläche der Spreizhülse anliegen oder, wie dargestellt, unter Zwischenlage einer Unterlagscheibe 25 einen zweiten Anschlag für die rückwärtige Stirnfläche der Spreizhülse 22 bilden. Zugleich dient die Unterlagscheibe zur Festlegung eines Anschlussbauteils C.

Der zweite Anschlag 25, 26 ist relativ zum ersten Anschlag 24 axial verschiebbar, indem die Mutter 26 mehr oder weniger weit auf die Gewindestange 23 aufgeschraubt wird. Dabei werden die die Stirnflächen der Spreizhülse 22 überragenden Randbereiche des Längsschlitzes axial zusammengepresst, wobei die Spreizhülse 22 radial aufgeweitet wird und in der Aufnahmebohrung B im Untergrund G verspreizt wird. Für den Fall, dass der Winkel, unter dem der Längsschlitz 5 gegenüber der Achse der Spreizhülse geneigt ist, grösser ist als der Winkel der Selbsthemmung, bleibt die Spreizhülse 22 nur solange verspreizt wie die axiale Spannkraft aufrechterhalten wird. Nach dem Aufheben der axialen Spannkraft durch Lösen der Mutter 26 kehrt die Spreizhülse 22 wieder in ihre gestreckte Ausgangsstellung zurück, wobei ihr Aussendurchmesser reduziert wird. Danach kann der Spreizdübel 21 vollständig aus der Aufnahmebohrung B entfernt werden. In einer weiteren Variante des erfindungsgemässen Spreizdübels kann an Stelle der Ankerstange mit einem Aussengewinde eine mit einem Innengewinde versehene Hülse vorgesehen sein, die von der Spreizhülse umgeben wird. Dabei stützt sich die Spreizhülse an einer Ringschulter am Vorderende der Innengewindehülse ab.

Wie in der Schnittdarstellung senkrecht zur Achse der Spreizhülse 22 in Fig. 5 angedeutet, können die Randflächen des Längsschlitzes 5 mit Führungselementen 27 28 ausgestattet sein. Die Führungselemente 27, 28 verhindem ein radiales Verschieben der Randflächen, erlauben ihnen jedoch ein ungehindertes axiales. Aneinandergleiten. Die Führungselemente können durch korrespondierende Leisten und Rillen gebildet sein oder, wie dargestellt, die Form einer Nut 28 in einer der Randflächen und einer vorspringenden, korrespondierenden Feder 27 in der anderen Randfläche des gegenüber der Achse geneigt verlaufenden Längsschlitzes 5 besitzen. Während die Führungselemente 27, 28 in Verbindung mit einer Ausführungsvariante des erfindungsgemässen Spreizdübels mit Ankerstange 23 zum Aufrechterhalten einer axialen Spannkraft dargestellt sind, versteht es sich, dass auch Spreizhülsen von Spreizdübeln gemäss den Darstellungen in Fig. 1 und 2 mit derartigen Führungselementen an den Randflächen versehen sein können.

## Patentansprüche

1. Spreizdübel umfassend eine Spreizhülse (2; 22), die durch axiale Stauchung radial aufweitbar ist, **dadurch gekennzeichnet**, dass die Spreizhülse (2; 22) mit einem Schlitz (5) versehen ist, der sich über ihre gesamte axiale Länge erstreckt und gegenüber ihrer Achse (A) geneigt verläuft, dass die Spreizhülse (2; 22) im unverspreizten Zustand derart in axialer Richtung gestreckt ist, dass jeweils ein Randbereich (6, 7) des Schlitzes eine Stimseite (8, 9) der Spreizhülse (2; 22) überragt, und dass Mittel (α, 52, 53; 51; 23, 24, 25, 26) vorgesehen sind, welche die Spreizhülse (2; 22) im axial gestauchten und radial aufgeweiteten Zustand sichern.

2. Spreizdübel nach Anspruch 1, dadurch gekennzeichnet, dass an den Randflächen (52, 53) des Längsschlitzes (5) Führungselemente (27, 28) vorgesehen sind, die axial aneinander gleiten und ein radiales Verschieben der Randflächen relativ zueinander verhindern.

3. Spreizdübel nach Anspruch 1 oder 2, dadurch gekennzeichnet, dass die Führungselemente aus einer Nut (28) an einer der Randflächen und einer korrespondierenden Feder (27) an der anderen Randfläche des Längsschlitzes (5) bestehen.

4. Spreizdübel nach einem der Ansprüche 1 - 3, dadurch gekennzeichnet, dass der Winkel (α), unter dem der Längsschlitz (5) gegenüber der Achse (A) geneigt verläuft, kleiner oder gleich dem Grenzwinkel ist, bei dem Selbsthemmung eintritt, wobei der Grenzwinkel durch die Beziehung α = arctan (µ_{Gleit}) definiert ist und µ_{Gleit} den Reibungskoeffizienten bei Gleitreibung bezeichnet, und vorzugsweise von etwa 2° bis etwa 6° beträgt, und dass die Mittel zur Sicherung der axial gestauchten und radial aufgeweiteten Spreizhülse (2) von den aneinander gleitenden Randflächen (52, 53) des Längsschlitzes (5) gebildet sind.

5. Spreizdübel nach Anspruch einem der vorangehenden Ansprüche, dadurch gekennzeichnet, dass die aneinander gleitenden Randflächen (52, 53) des Längsschlitzes (5) miteinander verrastbare Rippen oder Verzahnungen (51) aufweisen.

6. Spreizdübel nach einem der vorangehenden Ansprüche, dadurch gekennzeichnet, dass die Spreizhülse (2; 22) eine Innengewindehülse umgibt und sich an einer Ringschulter am Vorderende der Innengewindehülse abstützt.

7. Spreizdübel nach einem der Ansprüche 1 - 3, dadurch gekennzeichnet, dass der Winkel (α), unter dem der Längsschlitz (5) gegenüber der Achse (A) geneigt verläuft, grösser ist als der Grenzwinkel, bei dem Selbsthemmung eintritt, wobei der Grenzwinkel durch die Beziehung α = arctan (µ_{Gleit}) definiert ist und µ_{Gleit} den Reibungskoeffizienten bei Gleitreibung bezeichnet, und dass die Spreizhülse (22) zwischen zwei axial beabstandeten Anschlagschultem (24, 25, 26) angeordnet ist, die an einer Ankerstange (23) vorgesehen sind und unter axialem Stauchen der Spreizhülse (22) relativ zueinander verschiebbar sind und die Mittel zur Sicherung der axial gestauchten und radial aufgeweiteten Spreizhülse (22) bilden.

8. Spreizdübel nach Anspruch 7, dadurch gekennzeichnet, dass die Ankerstange (23) ein Kopfbolzen ist, wobei die in Setzrichtung vordere Anschlagschulter durch den Kopf (24) des Kopfbolzens gebildet ist und die rückwärtige Anschlagschulter von einer Mutter (26) gebildet ist, die, gegebenenfalls unter Zwischenlage einer Unterlagscheibe (25), auf ein Aussengewinde am rückwärtigen Ende des Kopfbolzens (23) aufgeschraubt ist.

9. Spreizdübel nach einem der vorangehenden Ansprüche, dadurch gekennzeichnet, dass die Spreizhülse (2; 22) ein Blechbiegestanzteil ist.

10. Spreizdübel nach einem der vorangehenden Ansprüche, dadurch gekennzeichnet, dass die Aussenfläche der Spreizhülse (2; 22) Vorsprünge, Rippen oder dergleichen reibwerterhöhende Mittel (10) aufweist.

## Claims

1. An expansion anchor comprising an expansion sleeve (2; 22) which can be expanded radially by axial compression, **characterised in that** the expansion sleeve (2; 22) is provided with a slit (5) which extends over the entire axial length thereof and runs at a slant in relation to the axis (A) thereof, that in its unexpanded state the expansion sleeve (2; 22) is stretched axially in such a way that each edge region (6, 7) of the slit protrudes beyond an end face (8, 9) of the expansion sleeve (2; 22), and that means (α, 52, 53; 51; 23, 24, 25, 26) are provided which secure the expansion sleeve (2; 22) in its axially compressed and radially expanded state.

2. An expansion anchor according to claim 1, characterised in that guide elements (27, 28) are provided at the edge faces (52, 53) of the longitudinal slit (5), which guide elements slide on each other axially and prevent radial displacement of the edge faces in relation to each other.

3. An expansion anchor according to claims 1 or 2, characterised in that the guide elements consist of a groove (28) on one of the edge faces and of a corresponding tongue (27) on the other edge face of the longitudinal slit (5).

4. An expansion anchor according to any one of claims 1 - 3, characterised in that the angle (α) at which the longitudinal slit (5) runs at a slant in relation to the axis (A) is less than or equal to the limiting angle at which self-locking occurs, wherein said limiting angle is defined by the relationship α = arctan (µ_{slid}) and µ_{slid} denotes the coefficient of friction for sliding friction. and preferably ranges from about 2° to about 6°, and that the means for securing the axially compressed and radially expanded expansion sleeve (2) are formed from the edge faces (52, 53) of the of the longitudinal slit (5) which slide on each other.

5. An expansion anchor according to any one of the preceding claims, characterised in that the edge faces (52, 53) of the longitudinal slit (5) which slide on each other comprise ribs or denticulations (51) which can lock with each other.

6. An expansion anchor according to any one of the preceding claims, characterised in that the expansion sleeve (2; 22) surrounds an internally threaded bush and is supported on an annular collar at the front end of the internally threaded bush.

7. An expansion anchor according to any one of claims 1- 3, characterised in that the angle (α) at which the longitudinal slit runs at a slant in relation to axis (A) is greater than the limiting angle at which self-locking occurs, wherein said limiting angle is defined by the relationship α = arctan (µ_{slid}) and µ_{slid} denotes the coefficient of friction for sliding friction, and that the expansion sleeve (22) is disposed between two axially spaced-apart stop collars (24, 25, 26), which are provided on an anchor rod (23) and which can be displaced in relation to each other with axial compression of the expansion sleeve (22), and which form means for securing the axially compressed and radially expanded expansion sleeve (22).

8. An expansion anchor according to claim 7, characterised in that the anchor rod (23) is a headed bolt, wherein the stop collar at the front in the direction of placement is formed by the head (24) of the headed bolt and the rear stop collar is formed by a nut (26), which is screwed, optionally with the interposition of a washer (25), on to an external thread at the rear end of the headed bolt (23).

9. An expansion anchor according to any one of the preceding claims, characterised in that the expansion sleeve (2: 22) is a cut and bent sheet metal part.

10. An expansion anchor according to any one of the preceding claims, characterised in that the outer face of the expansion sleeve (2; 22) comprises projections, ribs, or similar means (10) which increase the coefficient of friction.

## Revendications

1. Cheville à expansion comprenant une douille expansible (2 ; 22) qui peut être élargie radialement par écrasement axial, caractérisée en ce que la douille expansible (2 ; 22) est pourvue d'une fente (5) qui s'étend sur toute sa longueur axiale et est inclinée par rapport à son axe (A), en ce qu'à l'état non expansé la douille expansible (2 ; 22) est étirée dans la direction axiale de façon qu'une zone de bord (6, 7) de la fente dépasse de chaque face frontale (8, 9) de la douille expansible (2 ; 22), et en ce qu'il est prévu des moyens (α, 52, 53 ; 51 ; 23, 24, 25, 26) qui immobilisent la douille expansible (2 ; 22) dans la position écrasée axialement et élargie radialement.

2. Cheville à expansion selon la revendication 1, caractérisée en ce que sur les surfaces de bord (52, 53) de la fente longitudinale (5) sont prévus des éléments de guidage (27, 28) qui coulissent axialement l'un contre l'autre et empêchent les surfaces de bord de bouger radialement l'une par rapport à l'autre.

3. Cheville à expansion selon la revendication 1 ou 2, caractérisée en ce que les éléments de guidage sont constitués par une rainure (28) sur l'une des surfaces de bord et par une languette correspondante (27) sur l'autre surface de bord de la fente longitudinale (5).

4. Cheville à expansion selon l'une des revendications 1 à 3, caractérisée en ce que l'angle (α) selon lequel la fente longitudinale (5) s'étend en biais par rapport à l'axe (A) est inférieur ou égal à l'angle limite auquel se produit le blocage automatique, l'angle limite étant défini par la relation
α = arctan (µ_{Gleit}), sachant que µ_{Gleit} désigne le coefficient de frottement en cas de frottement de glissement, et étant compris de préférence entre environ 2° et environ 6°, et en ce que les moyens d'immobilisation de la douille expansible écrasée axialement et élargie radialement (2) sont formés par les surfaces de bord coulissant l'une contre l'autre (52, 53) de la fente longitudinale (5).

5. Cheville à expansion selon une des revendications précédentes, caractérisée en ce que les surfaces de bord coulissant l'une contre l'autre (52, 53) de la fente longitudinale (5) comportent des nervures ou des dentures (51) emboîtées les unes dans les autres.

6. Cheville à expansion selon une des revendications précédentes, caractérisée en ce que la douille expansible (2 ; 22) entoure un manchon taraudé et prend appui sur un épaulement annulaire situé à l'extrémité avant du manchon taraudé.

7. Cheville à expansion selon l'une des revendications 1 à 3, caractérisée en ce que l'angle (α) selon lequel la fente longitudinale (5) s'étend en biais par rapport à l'axe (A) est supérieur à l'angle limite auquel se produit le blocage automatique, l'angle limite étant défini par la relation α = arctan(µ_{Gleit}), sachant que µ_{Gleit} désigne le coefficient de frottement en cas de frottement de glissement, et en ce que la douille expansible (22) est disposée entre deux épaulements de butée distants axialement (24, 25, 26) qui sont prévus sur une tige d'ancrage (23) et se déplacent l'un par rapport à l'autre lors de l'écrasement axial de la douille d'expansion (22) et qui forment les moyens d'immobilisation de la douille expansible écrasée axialement et élargie radialement (22).

8. Cheville à expansion selon la revendication 7, caractérisée en ce que la tige d'ancrage (23) est un boulon à tête, l'épaulement de butée situé à l'avant dans le sens d'enfoncement étant formé par la tête (24) du boulon à tête et l'épaulement de butée arrière étant formé par un écrou (26) qui, moyennant éventuellement interposition d'une rondelle (25), est vissé sur un filetage extérieur situé à l'extrémité arrière du boulon à tête (23).

9. Cheville à expansion selon une des revendications précédentes, caractérisée en ce que la douille expansible (2 ; 22) est une pièce en tôle découpée et cintrée.

10. Cheville à expansion selon une des revendications précédentes, caractérisée en ce que la surface extérieure de la douille expansible (2 ; 22) présente des saillies, des nervures ou des moyens analogues (10) pour augmenter le coefficient de frottement.
